Europäisches Patentamt

European Patent Office

Office européen des brevets

(19)

(11) **EP 1 220 112 A2**

(12) **EUROPEAN PATENT APPLICATION**

(43) Date of publication:
**03.07.2002 Bulletin 2002/27**

(51) Int Cl.$^7$: **G06F 17/30**

(21) Application number: **01304751.9**

(22) Date of filing: **30.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.12.2000 KR 2000082756**

(71) Applicant: **SAMSUNG ELECTRO-MECHANICS Co. Ltd.**
**Suwon, Kyunggi-do (KR)**

(72) Inventors:
• **Choi, Yang-Lim**
**Bundang-gu, Seongnam-si, Gyeonggi-do (KR)**

• **Yoo, Ki-Won**
**Songpa-gu, Seoul (KR)**
• **Cho, Nam-Ik, c/o Seoul National University**
**Gwanak-gu, Seoul (KR)**
• **Lee, Jong-Ha**
**Gwanak-gu, Seoul (KR)**

(74) Representative: **Geary, Stuart Lloyd et al**
**Venner, Shipley & Co.,**
**20 Little Britain**
**London EC1A 7DH (GB)**

(54) **Line based image matching method**

(57) A line based image matching method in which a model image indexed by similar shape descriptors to a query image is retrieved from an image database indexed by line based shape descriptors. The line based image matching method involves: collecting line information of a query image and model images; defining the binary relation between the lines of the query image and the lines of the model images; measuring the compatibility coefficients of the node-label pairs of the query and model images based on the binary relation; and measuring the similarity between the query and model images on the basis of continuous relaxation labeling using the compatibility coefficient.

FIG. 1

```
          START
            │
  COLLECT INFORMATION ON LINES      ~102
    OF QUERY AND MODEL IMAGES
            │
  DEFINE BINARY RELATION BETWEEN THE ~104
   LINES OF QUERY AND MODEL IMAGES
            │
  MEASURE COMPATIBILITY COEFFICIENTS ~106
  BETWEEN NODE−LABEL PAIRS OF QUERY
   AND MODEL IMAGES USING THE BINARY
              RELATION
            │
     MEASURE SIMILARITY BETWEEN      ~108
    QUERY AND MODEL IMAGES BASED
 ON CONTINUOUS RELAXATION LABELING
  USING THE COMPATIBILITY COEFFICIENTS
            │
    SELECT MODEL IMAGE WITH THE      ~110
  HIGHEST SIMILARITY TO QUERY IMAGE
            │
           END
```

EP 1 220 112 A2

**Description**

The present invention relates to an image matching method comprising collecting characterising information for a query image and a plurality of model images and determining the similarity between the query image and each model image on the basis of said characterising information.

Shape descriptors are low level abstractions of images useful for searching images. Recently advances have been made in algorithms for describing the shape of an object in an image and measuring the degree similarity between images based on the shape descriptors. These algorithms are enough to describe the shape of a particular object but not to recognize the shape of an arbitrary object. The shape descriptors suggested in MPEG-7 are obtained using feature points found through a variety of transformatons of a given object. There are many kinds of shape descriptors. The eXperiment Model 1 (XM) of MPEG-7 suggest two types of shape descriptors: Zernike moment shape descriptor and curvature scale space shape descriptor. As for the Zernike moment shape descriptor, Zernike base functions are defined for a variety of shapes for investigating the distribution of the shapes within an image. The image at a predetermined size is projected over all the base functions, and the resultant values are used as the shape descriptors. As for the curvature scale space shape descriptor, the contour of a model image is extracted, and changes of curvature points of an image along the contour are expressed as peak values on a scaled space. Then, the location of the peak values are expressed as a 2-dimensional vectors. The extraction of the former shape descriptor can be applied only when each shape of the image and the base function have a similar scale. Also, the size of the input image is restricted. On the other hand, a drawback of the latter shape descriptor extraction lies in that the shapes are extracted from only a single object.

According to a conventional shape descriptor based image matching method, accurate extraction of an object from a query image is needed prior to retrieving of a model image indexed by similar shape descriptors to the query image from a database. In other words, if the object cannot be accurately extracted, retrieving a model image for the conventional image matching is impossible.

Therefore, there is a need for a simple image matching method capable of retrieving a model image indexed by similar shape descriptors to a query image from an image database indexed by line based shape descriptors, without the need for accurate object extraction.

A method according to the present invention is characterised in that said characterising information comprises, for each image, relationships between paired lines.

Preferably, the method includes determining said similarities on the basis of continuous relaxation labelling using compatibility coefficients for pairs comprising query image nodes and model image labels determined on the basis of characterising information.

Alternative and preferred features are set out in claims 3 to 16 appended hereto.

An embodiment of the present invention will now be described, by way of example, with reference to the accompanying drawings, in which:-

Figure 1 is a flowchart illustrating the main steps of a line based image matching method according to the present invention;
Figure 2A illustrates a difference in slope of two lines as an example of the binary relation between two lines;
Figure 2B illustrates an angle between the line segment connecting the middle points of two lines, and one of the two lines, as another example of the binary relation between two lines;
Figures 3A to 3C illustrate feature extraction;
Figures 4A and 4B illustrate line approximation for an image; and
Figures 5A and 5B illustrate line approximation for an image.

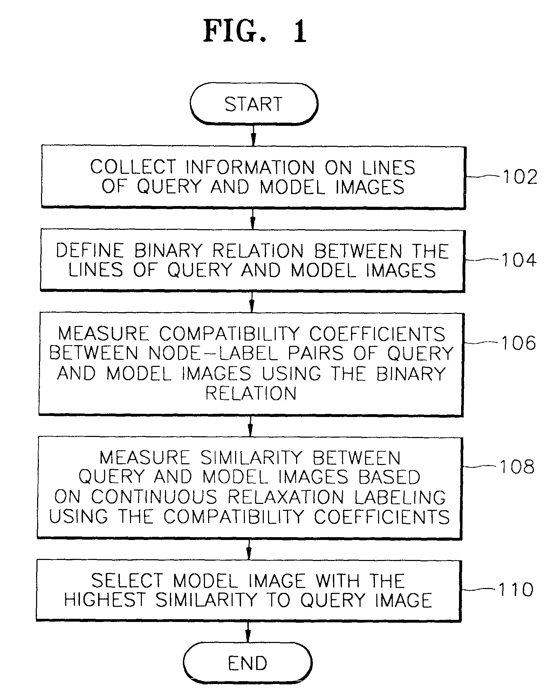

Referring to Figure 1, line information regarding a query image and model images is obtained (step 102). Here, it is assumed that the model images are stored in a database, and indexed by line-based shape descriptors. These line-based shape descriptors can be extracted by a shape descriptor extraction method, e.g. that described in Korean Patent Application No. 00-62163. Shape descriptors are extracted from a query image by the shape descriptor extraction method. The shape descriptors extracted by the shape descriptor extraction method comprise sets of lines. Line information regarding the query image and model images can be obtained from the sets of lines.

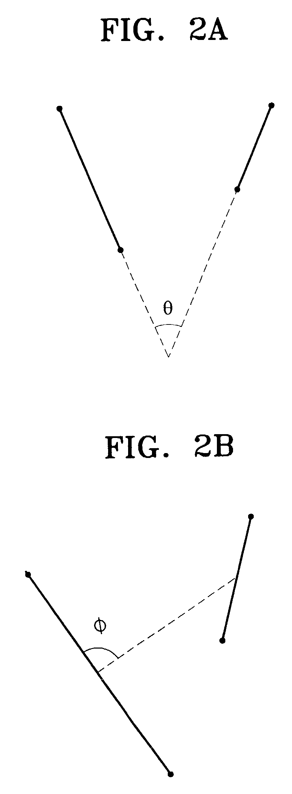

Binary relations between the lines of the query image and model images are defined (step 104). The intrinsic attributes of a single line, such as slope, length or location of the mid-point, and binary relations between two lines, such as angular difference, ratio of the lengths, relative location or relative distance between two lines, can be used as the characterising features of the lines. In the present embodiment, the binary relations that are invariant to rotations, scale changes, and translations are used as the lines features. Figure 2A illustrates a difference in slope between two lines as an example of a binary relation. As shown in Figure 2A, the relative position of the two lines can be expressed by the difference ($\theta$) in the slopes of the two lines. Figure 2B illustrates an angle between the line segment connecting the mid-points of the two lines, and one of the two lines, as another example of a binary relation between two lines. As shown in Figures 2B, the relative location between two lines can be expressed by the angle ($\phi$). Although not illustrated in the drawings, a ratio (r) of the lengths of the two lines can be used as a binary relation between the two lines.

In the line based image matching method according to the present invention, the correspondence between a set of lines for the query image and a set of lines for the model images is determined based on continuous relaxation labelling. For the continuous relaxation labelling, the initial probability is updated on the basis of compatibility coefficients and a more recent labelling status. Once the initial probability is assumed, the probability is updated depending on the comparability coefficients. The compatibility coefficients are used in modelling possible matching conditions to reach a satisfactory labelling. Accurate labelling close to a real query image is important.

Next, in step 106, the compatibility coefficients between node-label pairs of the query and model images are determined based on the binary relations defined in step 104. The procedures of step 106 are as follows. First, a binary relation value $\xi_{ij}$ between two nodes $v_i$ and $v_j$ within the set of lines for the query image is calculated based on their binary relations. Here, $i$ and $j$ denote the identifiers of the nodes of the query image, and are not identical to each other. A binary relation value $\xi_{\lambda\lambda}$, between two labels $\lambda$, and $\lambda'$ within the set of lines for each model image is calculated from their binary relations. Here, $\lambda$ and $\lambda'$ denote the identifiers of the labels of the model image. The strength of compatibility between the node pairs of the query image and the label pairs of a model image is expressed as the compatibility coefficient $r_{ij}(\lambda, \lambda')$. The compatibility coefficient $r_{ij}(\lambda, \lambda')$ is determined to be between 0 and 1 based on the binary relations of the query image and model images. The compatibility coefficient $r_{ij}(\lambda, \lambda')$ measures the strength of compatibility between node-label pairs: high values correspond to compatibility and low values correspond to incompatibility. For example, in considering the compatibility of the node-label pair ($v_i$, $\lambda$), if the compatibility of label $\lambda_1$ for the node $v_i$ is higher than that of label $\lambda_2$, the compatibility coefficient is defined to satisfy the following relation:

$$r_{ij}(\lambda_1, \lambda) > r_{ij}(\lambda_2, \lambda') \tag{1}$$

When the binary relation of a node pair ($i,j$) of the query image coincides with the binary relation of a label pair ($\lambda, \lambda'$), the coefficient $r_{ij}(\lambda, \lambda')$ is determined to be 1. In the present embodiment, the compatibility coefficient $r_{ij}(\lambda, \lambda')$ is expressed as

$$r_{ij}(\lambda, \lambda') = \frac{1}{1 + \|\rho(i, j, \lambda, \lambda')\|} \tag{2}$$

where

$$\rho(i, j, \lambda, \lambda') = \left( \sum_{k=1}^{K} \left\| \xi_{ij}^{(k)} \varsigma_{i\lambda\lambda'}^{(k)} \right\|^{\alpha} \right)^{\frac{1}{\alpha}},$$

and "K" denotes the number of elements of a character vector for a defined binary relation. In formula (2), "$\rho$" is a measure of the difference in compatibility between node-label pairs.

Next, the similarity is determined based on the continuous relaxation labelling with the compatibility coefficients (step 108). As previously described, in a continuous relaxation labelling process, the initial probability is updated on the basis of compatibility coefficients, and a more recent labelling status. Once the initial probability is assumed, the probability is updated depending on the compatibility coefficients. The compatibility coefficients are used in modelling possible matching conditions to reach a satisfactory labelling. Accurate labelling close to a real query image is important. Step 108 performed based on the continuous relaxation labelling using the compatibility coefficients involves a probability updating step, a normalisation step, and a similarity determination step. First, a uniform initial probability is assigned to a predetermined number of upper node-label pairs in which the sums of the highest degree of support by each adjacent label for the nodes are within the range of an upper level, wherein the initial probability must be close to the final probability.

A probability update element for the continuous relaxation labelling is defined as

$$q_i^{(k)}(\lambda) = \sum_j \alpha_i \left( \sum_\lambda r_{ij}(\lambda,\lambda')p_j^{(k)}(\lambda') \right)$$

where $p_j^{(k)}(\lambda')$ denotes the node-to-label correspondence probability, and k denotes the number of iterations needed. The probability is updated as follows on the basis of the Zucker's theory which ensures an efficient convergence result:

$$p_i^{(k+1)}(\lambda) = p_i^{(k)}(\lambda) + p_i^{(k)}(\lambda)\frac{q_i^{(k)}(\lambda)-\overline{q_i^{(k)}}}{q_i^{(k)}}$$

where , and

$$q_i^{(k)}(\lambda) = \sum_j \alpha \sum_\lambda r_{ij}(\lambda,\lambda')p_j^{(k)}(\lambda') ,$$

and

$$\overline{q_i^{(k)}} = \sum_\lambda p_i^{(k)}(\lambda)q_i^{(k)}(\lambda) .$$

The range of each element of the character vector does not coincide with other elements, and thus there is a need for normalization. Information on lines to be matched with a query image can be clearly obtained by the node-to-label correspondence based on the relaxation labelling. One of the lines from the set for the query image is selected, and the remainder of the lines are normalized with respect to the selected line in terms of size and location. In particular, an arbitrary line is selected from the set of lines of a query image. The length of the selected line is assigned 1, and a spatial transform function is determined such that the selected line becomes aligned with the X-axis of an orthogonal co-ordinate system. Then, all the lines for the query image are transformed by the spatial transform function. This spatial transformation is carried out for all the lines of the model images corresponding to the selected lines.

Then, the similarities between the query image and model images are determined. In the present embodiment, the similarities are determined by calculating the sum of the node-to-label distances of the query and each of the model images. A variety of techniques can be applied to determine the similarities. For example, if the node-to-label correspondences between the query image and the model images is apparent, and if the normalization with respect to rotations and scale changes is carried out for the corresponding lines, the distances between the nodes and labels can be directly determined using the Euclidian distance. Alternatively, the distances can be measured using the Housdorff distance, which ensures a more accurate similarity result. In the present embodiment, the similarity between the query image and a model image is determined as follows. The distances between the corresponding nodes and labels are measured for the two line sets of the query image and each of the model images, using the Euclidian distance. Then, the sum of all the distances is calculated, and then the similarity between two images is determined with the reciprocal of the sum. The model image having the highest degree of similarity is retrieved (step 110).

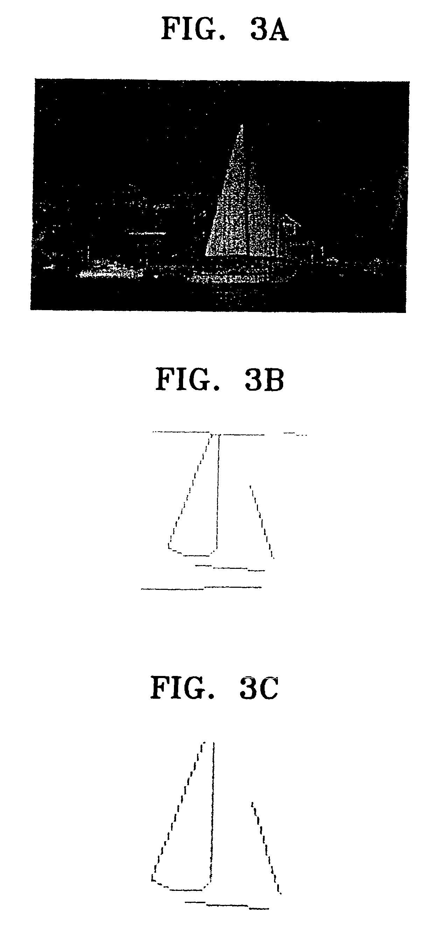

A simulation experiment was carried out based on the above-mentioned line based image matching method. Edges of a query image were extracted, and the extracted edges were approximated into lines to express the query image with the lines. Then, some of the lines of the query image were selected by a user, and then matched with model images using information on the selected lines. An example of a query image is shown in Figure 3A. Figure 3B illustrates the query image of Figure 3A after the above-mentioned line approximation. Figure 3C illustrates some lines selected from the query image of Figure 3B by user.

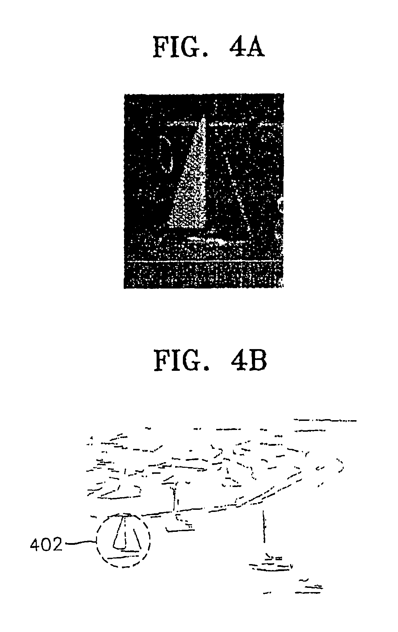

Figure 4A illustrates an example of a model image corresponding to the query image which was retrieved in the simulation test. Figure 4B illustrates the model image of Figure 4A after line approximation. As shown in Figure 4B, the retrieved model image approximated with lines, as indicated by reference numeral 402, includes similar lines to the line approximated query image, as shown in Figure 3C.

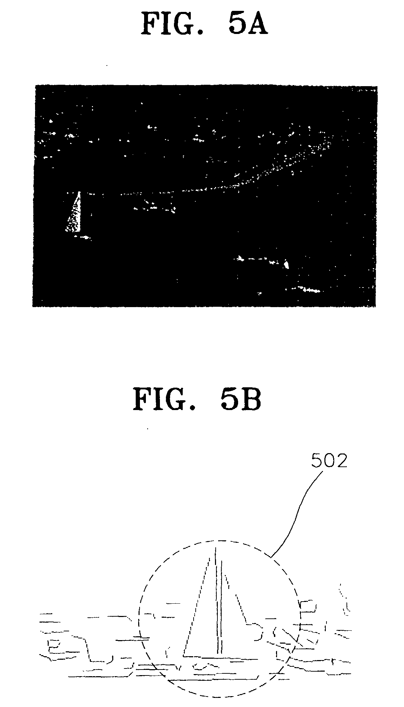

Figure 5A illustrates another example of a model image, and Figure 5B illustrate the model image of Figure 5A after line approximation. As shown in Figure 5B, the line approximated model image, as indicated by reference numeral 502, also includes similar lines to the line approximated query image, as shown in Figure 3C.

As previously mentioned, in the line based image matching method according to the present invention, a model image with similar shape descriptors to a query image can be retrieved from an image database indexed by line based shape descriptors, without need for object extraction from the query image.

An apparatus according to the present invention includes an image input for receiving query images, a memory storing a plurality model images indexed by line-based shape descriptors therefor, a display for displaying images, user input means and processing means. The processing means is programmed to perform line approximation on an image received at the image input and display the resulting line approximated image using the display means. The processing means is then responsive to operation of the user input means to select lines from the displayed image and perform a matching method, as described above, using the selected lines and the index for the model images, and display the model image determined to be the best match for the input image.

The line based image matching method according to the present invention may be embodied as a program executable on a personal or server computer. A functional program, code and code segments, used to implement the present invention, can be derived by a skilled computer programmer from the description of the invention contained herein. The program can be stored in a computer usable medium, including but not limited to storage media such as magnetic storage media, optically readable media. The program can also be transmitted by means of electric and electromagetic signals.

## Claims

1. An image matching method comprising collecting **characterising** information for a query image and a plurality of model images and determining the similarity between the query image and each model image on the basis of said **characterising** information, **characterised in that** said **characterising** information comprises, for each image, relationships between paired lines.

2. A method according to claim 1, including determining said similarities on the basis of continuous relaxation labelling using compatibility coefficients for pairs comprising query image nodes and model image labels determined on the basis of **characterising** information.

3. A line based image matching method comprising:

   collecting line information of a query image and model images;
   defining the binary relation between the lines of the query image and the lines of the model images;
   measuring the compatibility coefficients of the node-label pairs of the query and model images based on the binary relation; and
   measuring the similarity between the query and model images on the basis of continuous relaxation labeling using the compatibility coefficient.

4. The line based image matching method of claim 3, wherein the line information of each of the query and model images is expressed by shape descriptors.

5. The line based image matching method of claim 3, wherein the model images are retrieved from a database indexed by shape descriptors determined by:

   extracting the skeleton of a model image; thinning the skeleton; concatenating corresponding pixels based on the extracted skeleton to obtain a set of lines; and normalizing the set of lines to determine the normalized set of lines as the shape descriptors.

6. The line based image matching method of claim 3, wherein the binary relation is invariant with respect to rotations, scale changes and translations.

7. The line based image matching method of claim 6, wherein the binary relation includes at least one of an angular difference between two lines, a ratio of the lengths, a relative location, and a relative distance.

8. The line based image matching method of claim 3, wherein measuring the compatibility coefficients of the node-label pairs based on the binary relation comprises:

measuring the binary relation, denoted by $\xi_{ij}$, for two nodes *i* and *j* within the set of lines of the query image;
measuring the binary relation, denoted by $\xi_{\lambda\lambda'}$, for two labels $\lambda$ and $\lambda'$ within the set of lines for each of the model images; and
measuring the compatibility coefficients, denoted by $r_{ij}(\lambda, \lambda')$, for the node-label pairs of the query and each of the model images.

9. The line based image matching method of claim 8, wherein the compatibility coefficients $r_{ij}(\lambda, \lambda')$ as a measure of the strength of compatibility between the node-label pairs have high values corresponding to compatibility and low values corresponding to incompatibility.

10. The line based image matching method of claim 8, wherein the compatibility coefficients $r_{ij}(\lambda, \lambda')$ are determined as 1 if the binary relation of a node pair $(i, j)$ of the query image coincides with the binary relation of a label pair $(\lambda, \lambda')$.

11. The line based image matching method of claim 8, wherein the compatibility coefficients $r_{ij}(\lambda, \lambda')$ are expressed as:

$$r_{ij}(\lambda, \lambda') = \frac{1}{1+\|\rho(i,\, j,\, \lambda,\, \lambda')\|}$$

where

$$\rho\left(i, j, \lambda, \lambda'\right) = \left( \sum_{k=1}^{K} \left\| \xi_{ij}^{(k)} \, \zeta_{i\lambda\lambda'}^{(k)} \right\|^{\alpha} \right)^{\frac{1}{\alpha}},$$

"K" denotes the number of elements of a character vector for a defined binary relation; and "$\rho$" is a measure of the difference in compatibility on between node-label pairs.

12. The line based image matching method of claim 3, before measuring the similarity on the basis of the continuous relaxation labeling, further comprising assigning a uniform initial probability to a predetermined number of upper node-label pairs in which the sums of the highest degree of support by each adjacent label for the nodes are within the range of an upper level, the initial probability being close to the final probability.

13. The line based image matching method of claim 12, after assigning the uniform initial probability to the upper node-label pairs, further comprising defining a probability update element for the continuous relaxation labeling as:

$$q_i^{(k)}(\lambda) = \sum_j \alpha_i \left( \sum_\lambda r_{ij}(\lambda, \lambda') p_j^{(k)}(\lambda') \right)$$

where $p_j^{(k)}(\lambda')$ denotes the node-to-label correspondence probability, and k denotes the number of iterations needed.

14. The line based image matching method of claim 13, after defining the probability update element, further comprising updating the probability on the basis of the Zucker's theory using

$$p_i^{(k+1)}(\lambda) = p_i^{(k)}(\lambda) + p_i^{(k)}(\lambda) \frac{q_i^{(k)}(\lambda) - \overline{q_i^{(k)}}}{q_i^{(k)}}$$

where

$$q_i^{(k)}(\lambda) = \sum_j \alpha \sum_\lambda r_{ij}(\lambda, \lambda') p_j^{(k)}(\lambda'),$$

and

$$\overline{q_i^{(k)}} = \sum_\lambda p_i^{(k)}(\lambda) q_i^{(k)}(\lambda).$$

15. The line based image matching method of claim 3, wherein measuring the similarity between the query and model images comprises:

   calculating the sum of the distances between corresponding node-to-label pairs of the sets of lines for the query and each of the model images; and
   determining the reciprocal of the sum of the distances as the similarity between corresponding two images.

16. The line based image matching method of claim 15, wherein the distances are measured using the Euclidean distance or the Housdorff distance.

# FIG. 1

START

↓

COLLECT INFORMATION ON LINES
OF QUERY AND MODEL IMAGES — 102

↓

DEFINE BINARY RELATION BETWEEN THE
LINES OF QUERY AND MODEL IMAGES — 104

↓

MEASURE COMPATIBILITY COEFFICIENTS
BETWEEN NODE–LABEL PAIRS OF QUERY
AND MODEL IMAGES USING THE BINARY
RELATION — 106

↓

MEASURE SIMILARITY BETWEEN
QUERY AND MODEL IMAGES BASED
ON CONTINUOUS RELAXATION LABELING
USING THE COMPATIBILITY COEFFICIENTS — 108

↓

SELECT MODEL IMAGE WITH THE
HIGHEST SIMILARITY TO QUERY IMAGE — 110

↓

END

## FIG. 2A

## FIG. 2B

# FIG. 3A

# FIG. 3B

# FIG. 3C

FIG. 4A

FIG. 4B

402

# FIG. 5A

# FIG. 5B

502